# EUROPEAN PATENT SPECIFICATION

(11) **EP 3 742 895 B1**
(45) Date of publication and mention of the grant of the patent: **13.08.2025**
(21) Application number: 19700737.0
(22) Date of filing: 21.01.2019
(51) Int. Cl.: A01K 61/60

(54) **SEMI-SUBMERSIBLE SPAR-TYPE OFFSHORE FISH FARM WITH AN ADJUSTABLE BALLAST SYSTEM**
HALBTAUCHENDE OFFSHORE-FISCHFARM VOM HOLMTYP MIT EINSTELLBAREM BALLASTSYSTEM
PISCICULTURE OFFSHORE DE TYPE SPAR SEMI-SUBMERSIBLE COMPORTANT UN SYSTÈME DE BALLAST RÉGLABLE

(30) Priority: 25.01.2018 EP 18153431
(43) Date of publication of application: 02.12.2020
(73) Proprietor: Saulx Offshore, 6221 BT Maastricht (NL)
(72) Inventor: VAN LEEUWEN, Mark Rudolf, 6221 BT Maastricht (NL)
(74) Representative: Kramer-Ograjensek, Petra
(86) International application number: PCT/EP2019/051354
(87) International publication number: WO 2019/145252

(56) References cited:
- WO-A1-2016/128981
- CN-U- 205 196 711
- FR-A1- 2 531 835

## Description

### FIELD OF THE INVENTION

The present invention relates to a semi-submersible spar-type offshore fish farm for cultivating fish at open sea.

### BACKGROUND OF THE INVENTION

Aquaculture is the farming of aquatic organisms including fish, mollusks, crustaceans and aquatic plants. Farming implies some form of intervention in the rearing process to enhance production, such as regular stocking, feeding, protection from predators. Aquaculture involves cultivating freshwater and saltwater populations under controlled conditions, and can be contrasted with commercial fishing, which is the harvesting of wild fish. Particular kinds of aquaculture include fish farming, shrimp farming, oyster farming, Mari culture, algaculture, and the cultivation of ornamental fish. Fish farming using inshore fish farms in freshwater and offshore fish farms in saltwater is well known. An advantage of offshore fish farms is that deep-water cages can be used that have a large harvesting volume. Another advantage is that the deep-water cages can be kept away from coastal pollution areas. As a result, a good farming environment can be provided which is the basis for harvesting high-quality cultured fish.

WO2016128981A1 relates to a sea or ocean vessel for carrying out fish farming in deep water comprises a hull and one or more fish cages. The fish cage is fixedly or movably attached to the hull, for example on a steel frame, the vessel having a floating state in which the fish cage is at the sea surface level and a submerged state in which the fish cage is sufficiently below the water surface level, five and more typically fifteen meters or deeper, to be substantially unaffected by storm conditions at the surface. Either the vessel itself may be submerged, or the cages may be lowered down the side of the vessel.

CN205196711U relates to a fully submersible deep-water controllable lifting marine cage aquaculture device, which is constructed such that it can realize timely detachment of the cage when severe sea conditions come. It has the functions of lifting and lowering adjustment, horizontal rotation and rapid transfer, and can realize the simultaneous lifting and lowering movement of multiple cages, which can not only improve the utilization rate of the aquaculture sea area, but also improve the ability to avoid severe sea conditions, and solve the problems existing in the prior art.

Although there are many different types of fish farms, both inshore and offshore, the present invention relates to a semi-submersible spar-type offshore fish farm for cultivating fish at open sea comprising an elongated center column having one of a circular and polygonal cross-section and a semi-submersible netted rigid cage that is coaxially arranged around the elongated center column. This kind of cage can be submerged during heavy storms or typhoons to prevent damage to at least one of the cage and the offshore fish farm. While being submersed, this kind of cage is far less exposed to harsh sea conditions and hence far less subjected to physical stress. As a result, this kind of cage can be lighter and can have a less complicated structure. Moreover, the reduced movement of the cage reduces damage to stocks.

Stability of the semi-submersible spar-type offshore fish farm in its different modes of operation, i.e. during normal, storm or maintenance operation, is paramount and relies to a great extent on the configuration of the ballast system that comprises a counter weight or so-called clump weight and a buoyancy tank. In particular, the arrangement of the clump weight and the buoyancy tank with respect to each other influences the stability that can be achieved. A required arrangement of the clump weight and the buoyancy tank with respect to each other in order to achieve the required stability of the semi-submersible spar-type offshore fish farm in the abovementioned different modes of operation can typically not be achieved by limitations related to transportation and construction of the fish farm. These limitations commonly relate to practical limitations such as maximum crane height, dock depth, water depth at the quay of the shipyard, water depth in the channels towards the installation location and draft of heavy lift vessel or barge that potentially could transport the fish farm. Hence, semi-submersible spar-type fish farms known in the art suffer from compromised stability in at least one of normal, storm and maintenance mode of operation.

### SUMMARY OF THE INVENTION

It is an object of the present invention to provide a semi-submersible spar-type offshore fish farm for cultivating fish at open sea that pre-empts or at least reduces at least one of the abovementioned and/or other disadvantages associated with semi-submersible spar-type offshore fish farms known in the art.

Aspects of the present invention are set out in the accompanying independent and dependent claims. Features from the dependent claims may be combined with features from the independent claim as appropriate and not merely as explicitly set out in the claims.

At least one of the abovementioned objects is achieved by a semi-submersible spar-type offshore fish farm for cultivating fish at open sea as defined in claim 1.

In this way, the stability of the semi-submersible fish farm during normal, storm and maintenance modes of operation can be improved as the stability of the fish farm increases with an increasing distance between the at least one clump weight and the at least one buoyancy tank. Analogously, the stability of the fish farm decreases with a decreasing distance between the at least one buoyancy tank and the at least one clump weight. Hence, depending on the requirements regarding the stability of the fish farm and the dimensions of the fish farm, a suitable distance between the at least one buoyancy tank and the at least one clump weight can be determined that can yield sufficient stability in normal, storm and maintenance modes of operation.

During transportation and construction of the semi-submersible spar-type offshore fish farm, the at least one buoyancy tank and the at least one clump weight touch each other. When the fish farm is at its desired location in the sea, the at least one clump weight is arranged at a distance of the at least one buoyancy tank in order to yield the required stability of the fish farm in the abovementioned different modes of operation. In this way, stability issues of the known fish farms can be obviated. Moreover, problems regarding transportation of the semi-submersible spar-type offshore fish farm can be mitigated.

In an exemplary, non-limiting embodiment of the invention, the at least one passageway is arranged to interconnect opposing outer surfaces of the at least one buoyancy tank. In this way the at least one connecting element can extend through the entire buoyancy tank. The walls of the at least one passageway are solid and are arranged to ensure that in use of the fish farm no water can flow into the at least one buoyancy tank.

The first tapered section and the second tapered section are provided to create the necessary area to enable the transfer of the load of the at least one clump weight to the at least one buoyancy tank once the at least one clump weight and the at least one buoyancy tank are arranged at a suitable distance with respect to each other for providing the required stability of the fish farm.

In an embodiment of the semi-submersible spar-type offshore fish farm according to the invention, the at least one clump weight comprises at least one hollow chamber that is configured and arranged to receive a filling medium that in use of said fish farm keeps the at least one clump weight in place at said distance from the at least one buoyancy tank. The person skilled in the art will appreciate that the filling medium is any suitable material or combination of materials that keeps the at least one clump weight in place at said distance from the at least one buoyancy tank. The filling medium can be supplied in any suitable way for example by using a pumping system.

Moreover, the person skilled in the art will appreciate that according to an exemplary, non-limiting embodiment of the invention, the at least one clump weight will descend under the influence of gravity to said distance from the at least one buoyancy tank upon supplying the filling medium to the at least one hollow chamber of the at least one clump weight.

In an embodiment of the semi-submersible spar-type offshore fish farm according to the invention, the at least one connecting element is hollow and is configured and arranged to guide the filling medium into the at least one hollow chamber of the at least one clump weight. In this way, the at least one connecting element has a dual function, i.e. connecting the at least one clump weight and the at least one buoyancy tank with each other and guiding the filling medium into the at least one hollow chamber of the at least one clump weight. The person skilled in the art will appreciate that the filling medium can also be guided into the at least one hollow chamber of the at least one clump weight via a separate inlet or in any other suitable way.

In an embodiment of the semi-submersible spar-type offshore fish farm according to the invention, the at least one passageway is provided with a closing element that is configured and arranged to retain the filling medium in the at least one hollow chamber of the at least one clump weight. In an exemplary, non-limiting embodiment of the invention the closing element can be a reinforced plate that covers the passageway in the buoyancy tank after filling the at least one hollow chamber of the at least one clump weight with the filling medium.

In an embodiment of the semi-submersible spar-type offshore fish farm according to the invention, the fish farm comprises a control system that is configured and arranged to adjust the distance between the at least one buoyancy tank and the at least one clump weight. In this way said distance can be adjusted, i.e. increased and decreased, in an active way depending on the stability requirements for the fish farm.

In an embodiment of the semi-submersible spar-type offshore fish farm according to the invention, the distance between the at least one buoyancy tank and the at least one clump weight is in a range between 4 m and 14 m. Depending on the requirements regarding the stability of the fish farm, a distance between the at least one buoyancy tank and the at least one clump weight in the aforementioned range can yield sufficient stability in normal, storm and maintenance modes of operation for fish farms having a diameter of the semi-submersible netted cage in a range between 80 m and 180 m.

In an embodiment of the semi-submersible spar-type offshore fish farm according to the invention, the ballast system comprises at least one ballast tank that is connected to the at least one buoyancy tank. In an exemplary, non-limiting embodiment of the invention, the ballast tank can be connected to the bottom of the buoyancy tank directly. In another, non-limiting embodiment of the invention the ballast tank can be integrated into the buoyancy tank. The ballast tank can be filled or emptied according to the desired draft for the center column of the fish farm. For example, when rough sea conditions are expected due to heavy storms or typhoons, it is possible to move the elongated center column deeper below sea level by filling the ballast tank. In this way negative effects on the fish farm can be limited or ideally be prevented. Analogously, during calm sea conditions the elongated center column can be raised further above sea level by emptying the ballast tank. It is then possible, for example to harvest fish and/or to perform maintenance activities.

In an embodiment of the semi-submersible spar-type offshore fish farm according to the invention, the at least one connecting element has an effective height as seen in an axial direction of the elongated center column in a range between 5 m and 15 m. In this way, a distance between the at least one buoyancy tank and the at least one clump weight is in the abovementioned range between 4 m and 14 m can be achieved.

In an embodiment of the semi-submersible spar-type offshore fish farm according to the invention, the at least one buoyancy tank has a height as seen in an axial direction of the elongated center column in a range between 3 m and 6 m.

In an embodiment of the semi-submersible spar-type offshore fish farm according to the invention, the at least one clump weight has a height as seen in an axial direction of the elongated center column in a range between 0.5 m and 2 m. The person skilled in the art will appreciate that the clump weight which is a counter weight can have a flat pancake shape or any other polygon form structure comprising at least one of plates, stiffeners, girders and bulkheads.

In an embodiment of the semi-submersible spar-type offshore fish farm according to the invention, the at least one hollow connecting element has a first cross-section being one of C-shaped, circular, and polygonal and the at least one passageway has a second cross-section being one of C-shaped, circular, and polygonal that is adapted to the first cross-section to snuggly accommodate the at least one hollow connecting element in the at least one passageway.

In an embodiment of the semi-submersible spar-type offshore fish farm according to the invention, the filling medium is at least one of steel, lead, stone and concrete. The person skilled in the art will appreciate that the abovementioned filling materials are to be construed as mere examples of a suitable filling medium. Any material or combination of materials can be used as a filling medium if it enables, in use of the fish farm, to maintain the at least one clump weight at a distance from the at least one buoyancy tank to provide the required stability of the fish farm during normal, storm and maintenance modes of operation.

According to another aspect of the present invention a method of installing a semi-submersible spar-type offshore fish farm is provided in claim 13. Preferred embodiments are provided in claims 14 and 15.

### BRIEF DESCRIPTION OF THE DRAWINGS

Further features and advantages of the invention will become apparent from the description of the invention by way of exemplary and non-limiting embodiments of a semi-submersible spar-type offshore fish farm according to the invention.

The person skilled in the art will appreciate that the described embodiments are exemplary in nature only and not to be construed as limiting the scope of protection in any way. The person skilled in the art will realize that alternatives and equivalent embodiments of the semi-submersible spar-type offshore fish farm can be conceived and reduced to practice without departing from the scope of protection of the present invention.

Reference will be made to the figures on the accompanying drawing sheets. The figures are schematic in nature and therefore not necessarily drawn to scale. Furthermore, equal reference numerals denote equal or similar parts. On the attached drawing sheets,
figure 1 shows a schematic side view of a first exemplary, non-limiting embodiment of a semi-submersible spar-type offshore fish farm according to the invention while in use at a desired location at sea;
figure 2A shows a schematic perspective view of a first exemplary, non-limiting embodiment of a ballast system according to the invention in a configuration during transport and before installation of the fish farm at its desired location at sea;
figure 2B shows a schematic cross-sectional view of the first exemplary, non-limiting embodiment of the ballast system shown in figure 2A during installation of the fish farm at a desired location at sea;
figure 3A shows a schematic perspective view of a second exemplary, non-limiting embodiment of the ballast system according to the invention in a configuration during installation of the fish farm at a desired location at sea;
figure 3B shows a partial schematic cross-sectional view of the second exemplary, non-limiting embodiment of the ballast system shown in figure 3A;
figure 4 shows a schematic perspective view of a third exemplary, non-limiting embodiment of the ballast system according to the invention during installation of the fish farm at a desired location at sea; and
figure 5 shows a schematic perspective view of a fourth exemplary, non-limiting embodiment of the ballast system according to the invention during installation of the fish farm at a desired location at sea.

### DETAILED DESCRIPTION OF EMBODIMENTS

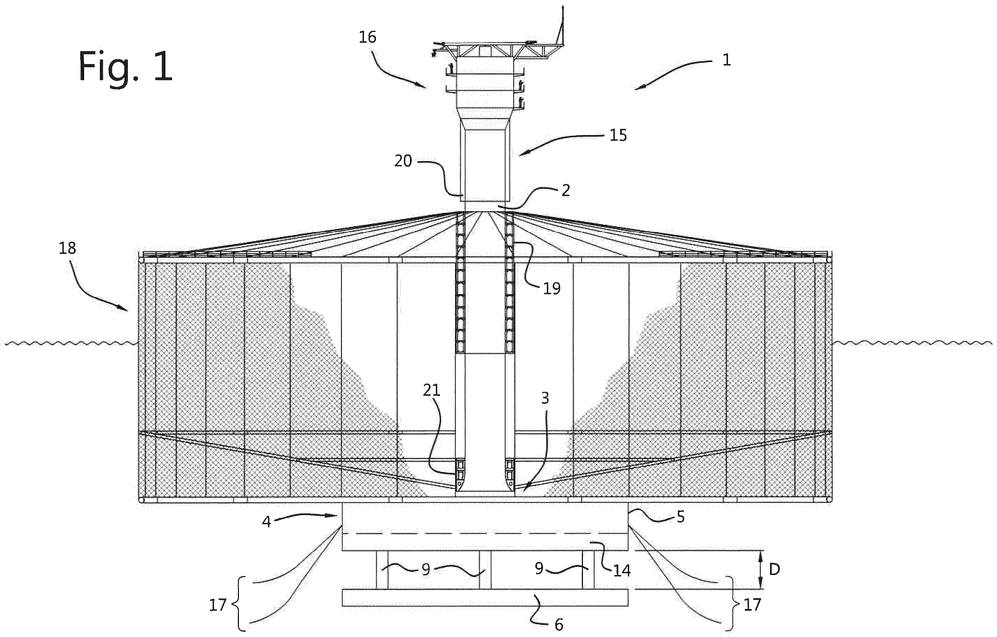

Figure 1 shows a schematic side view of a first exemplary, non-limiting embodiment of a semi-submersible spar-type offshore fish farm 1 according to the invention while in use at a desired location at sea. The fish farm 1 comprises an elongated center column 2 that has a circular cross-section. The elongated center column 2 has a first end part 3 and a second end part 15. The second end part 15 is provided with a control facility 16 that in use of the fish farm 1 remains positioned above sea level. The control facility 16 comprises an equipment room and a residence room or living quarter for operators of the fish farm 1. The control facility can comprise any system or equipment that is suitable to be located therein and that is required for the operation of the semi-submersible spar-type fish farm 1. Examples of such systems or equipment, which are not explained in further detail nor are shown in the appended figures, are power systems, generators, e.g. solar generators, switch boards, systems related to the fuel tanks and the oil tanks, piping systems, cable systems, and fish farming supporting systems such as CCTV (above and below sea level), communication systems comprising for example radio devices, GPS, a radar system, a telephone system, a broadcasting system and an alarm system. Figure 1 also shows a helicopter landing platform that is provided on the roof of the control facility 16.

Although not explained in further detail nor shown in the appended figures, the person skilled in the art will also appreciate that the semi-submersible spar-type offshore fish farm 1 can comprise at least one of a harvesting system, a mooring system, a boat landing system, a docking system, a dead fish removal system and a feeding system.

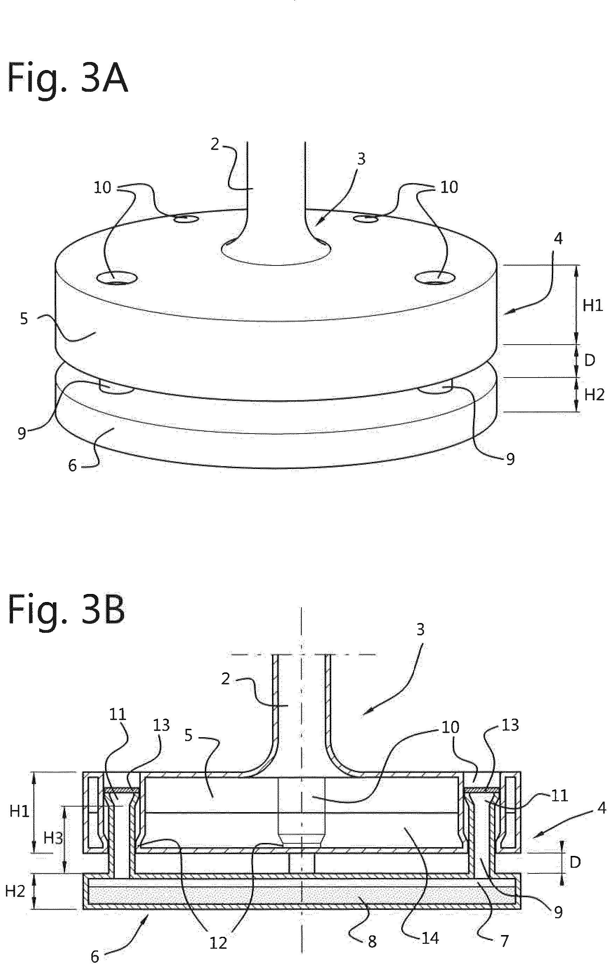

Figure 1 furthermore shows that the first end part 3 of the elongated center column 2 is provided with a ballast system 4. The ballast system 4 shown in figure 1 corresponds to the second exemplary, non-limiting embodiment of the ballast system 4 shown in figures 3A and 3B. The ballast system 4 is positioned below sea level and provides buoyancy and stability to the center column 2 of the fish farm 1. The ballast system 4 comprises a buoyancy tank 5 and an adjustable clump weight 6 that are movably interconnected. When the fish farm 1 is at its desired location at sea, the adjustable clump weight 6 is arranged at a distance D below the buoyancy tank 5. In this way, the stability of the semi-submersible fish farm 1 during normal, storm and maintenance modes of operation can be improved as the stability of the fish farm 1 increases with an increasing distance D between the adjustable clump weight 6 and the buoyancy tank 5. Hence, depending on the requirements regarding the stability of the fish farm 1 and the dimensions of the fish farm, a suitable distance D between the buoyancy tank 5 and the clump weight 6 can be determined that can yield sufficient stability in normal, storm and maintenance modes of operation.

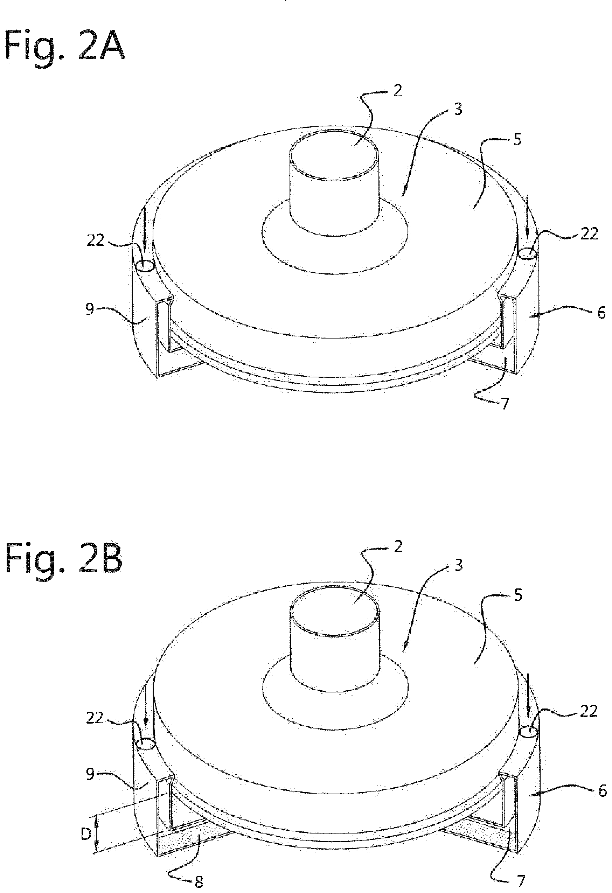

During transportation and before installation of the semi-submersible spar-type offshore fish farm 1 at its desired location at sea, the buoyancy tank 5 and the clump weight 6 touch each other. This is schematically shown in figure 2A that shows a schematic perspective view of a first exemplary, non-limiting embodiment of the ballast system 4. The person skilled in the art will appreciate that it is also possible to connect multiple adjustable clump weights with the buoyancy tank 5 in a suspended way. Furthermore, the person skilled in the art will appreciate that although not explicitly described in further detail nor shown in the appended figures, the ballast system 4 can comprise at least one of ballast/de-ballast pumps, piping systems, ventilation systems, valve systems, level gaging systems and air compressors that in use of the fish farm 1 enable ballasting or de-ballasting operations for allowing the center column 2 of the fish farm 1 to float upwards or to dive downwards. Figure 1 also shows that the ballast system 4 is provided with anchor cables 17 that are configured and arranged to connect the fish farm 1 when it is in use with the seabed in order to keep it positioned at its desired location.

The fish farm 1 shown in figure 1 furthermore comprises a semi-submersible netted rigid cage 18 that is coaxially arranged around the elongated center column 2 and can have a diameter in a range between 80m and 180m. For fish farms having semi-submersible netted rigid cages with diameters in the aforementioned range, the distance D between the buoyancy tank 5 and the clump weight 6 can be in a range between 4m and 14m to yield sufficient stability in normal, storm and maintenance modes of operation. The cage 18 is connected with a buoyancy sleeve 19 that is coaxially arranged around the elongated center column 2. Depending on requirements for the fish farm 1, the buoyancy sleeve 19 can for example be arranged at a fixed position on the elongated center column 2. In this case the buoyancy sleeve 19 cannot move along the elongated center column 2. On the contrary, it is also possible that the buoyancy sleeve 19 can be arranged at several positions along the elongated center column 2. As the buoyancy sleeve 19 is naturally buoyant, the last mentioned positioning of the buoyancy sleeve 19 can be achieved by filling or emptying the ballast tank 14 which is part of the ballast system 4. When the ballast tank 14 is filled to submerge the fish farm 1, the buoyancy sleeve 19 at some point is prevented from moving further upwards along the elongated center column 2 by a hard point. In the exemplary, non-limiting embodiment of the fish farm 1 shown in figure 1, the hard point is implemented as a limiting sleeve 20. The person skilled in the art will appreciate that the hard point can be implemented in any suitable manner, e.g. by providing the elongated center column 2 with a tapering section that has a larger diameter than the diameter of the buoyancy sleeve 19. Because the buoyancy sleeve 19 is naturally buoyant, there is no need for a separate ballasting system in the buoyancy sleeve 19 other than the mobile deep well pumps.

The semi-submersible netted rigid cage 18 further comprises a harvesting sleeve 21 that is arrangeable at several positions along the elongated center column 2 between the buoyancy sleeve 19 and the first end part 3. The harvesting sleeve 21 is not naturally buoyant and will therefore remain under water when the fish farm is at its desired location at sea. The harvesting sleeve 21 can be moved towards the buoyancy sleeve 19 using at least one of ballasting and a displacement system. By moving the harvesting sleeve 21 towards the buoyancy sleeve 19, fish can be harvested. After harvesting the desired amount of fish, the harvesting sleeve 21 can be lowered in any suitable way, for example under the influence of gravity.

The person skilled in the art will appreciate that the buoyancy sleeve 19 and the harvesting sleeve 21 are movable along the elongated center column 2 in any suitable way, for example in a sliding manner under the influence of a displacement system that can be accommodated in the control facility 16. The displacement system can comprise a winch. Furthermore, the person skilled in the art will appreciate that it can be advantageous if at least one of the buoyancy sleeve 19, the harvesting sleeve 21 and the center column 2 is provided with pads comprising a material, e.g. polytetrafluoroethylene (PTFE), that enhances sliding of the buoyancy sleeve 19 and the harvesting sleeve 21 along the center column 2.

The person skilled in the art will appreciate that depending on sea conditions it is possible to position the semi-submersible netted rigid cage 18 partially above sea level, for example for harvesting fish during calm sea conditions, and to position said cage completely below sea level, for example when heavy storms or typhoons are expected. The latter can be accomplished by ballasting the center column 2 of the fish farm 1. This is done by filling the ballast tank 14 of the ballast system 4 that is connected with the first end part 3 of the center column 2. When the ballast tank 14 is filled, the buoyancy sleeve 19 at some point is prevented from moving further upwards along the center column 2 by the limiting sleeve 20. Upon further filling of the ballast tank 14, the semi-submersible netted rigid cage 18 can be moved to a position beyond a top layer of the seawater where the conditions in the top layer have a limited or ideally no negative effect on the cage 18 and the fish stock that is contained within it.

Figure 2A shows a schematic perspective view of a first exemplary, non-limiting embodiment of a ballast system 4 according to the invention in a configuration during transport and before installation of the fish farm at its desired location at sea. As can be seen, in this configuration the buoyancy tank 5 and the clump weight 6 touch each other. The clump weight 6 comprises a hollow chamber 7 that is configured and arranged to receive a filling medium (not shown in figure 2A) that in use of said fish farm 1 keeps the clump weight 6 in place at distance D from the buoyancy tank 5. The filling medium 8 can be introduced into the hollow chamber 7 via inlets 22 which in the embodiment shown in figure 2A are arranged in the connecting element 9 of the clump weight 6. By providing connecting element 9 with inlets 22, the connecting element has a dual function, i.e. connecting the clump weight 6 and the buoyancy tank 5 with each other and guiding the filling medium 8 into the hollow chamber of the clump weight 6. The connecting element 9 shown in figure 2A is hollow. The connecting element 9 can also be solid and provided with passageways that are accessible via inlets 22 and enable guiding the filling medium into the hollow chamber 7 of the clump weight 6. The person skilled in the art will appreciate that the inlets 22 can also be arranged in other parts of the clump weight 6. Furthermore, the clump weight 6 can be provided with more than one hollow chamber 7. In that case, the hollow chambers can be interconnected with each other or isolated from each other.

Figure 2B shows a schematic cross-sectional view of the first exemplary, non-limiting embodiment of the ballast system 4 shown in figure 2A during installation of the fish farm at a desired location at sea. The person skilled in the art will appreciate that the filling medium 8 is any suitable material or combination of materials that keeps the clump weight 6 in place at said distance D from the buoyancy tank 5. The filling medium 8 can be supplied via the inlets 22 in any suitable way. For example by using a pumping system (not shown).

Moreover, the person skilled in the art will appreciate that according to an exemplary, non-limiting embodiment of the invention, the clump weight 6 will descend under the influence of gravity to said distance D from the buoyancy tank 5 upon supplying the filling medium 8 to the one hollow chamber 7 of the clump weight 6.

According to another exemplary, non-limiting embodiment of the semi-submersible spar-type offshore fish farm according to the invention, the fish farm comprises a control system (not shown) that is configured and arranged to adjust the distance between the buoyancy tank and the clump weight. In this way said distance can be adjusted, i.e. increased and decreased, in an active way depending on the stability requirements for the fish farm.

Figure 3A shows a schematic perspective view of a second exemplary, non-limiting embodiment of the ballast system 4 according to the invention in a configuration during installation of the fish farm at its desired location at sea. The clump weight 6 comprises four connecting elements 9 that are configured and arranged to interconnect the buoyancy tank 5 and the clump weight 6. Figure 3B shows a schematic partial cross-sectional view of the second exemplary, non-limiting embodiment of the ballast system 4 shown in figure 3A. As can be seen from figures 3A and 3B, the buoyancy tank 5 is provided with passageways 10 that each are configured and arranged to accommodate one of the connecting elements 9. Each of the passageways 10 is arranged to interconnect opposing outer surfaces of the buoyancy tank 5. In this way each connecting element 9 can extend through the entire buoyancy tank 5. The walls of each of the passageways 10 are solid and are arranged to ensure that in use of the fish farm no water can flow into the buoyancy tank 5.

Figure 3B shows that each of the connecting elements 9 comprises a first tapered section 11. Furthermore, it can be seen that each passageway 10 comprises a second tapered section 12. The first tapered sections 11 and the second tapered section 12 come in abutting contact when the buoyancy tank 5 and the clump weight 6 in use of the fish farm are at the full distance with respect to each other.

Figure 3B furthermore shows that at least two of the connecting elements are hollow and are configured and arranged to guide the filling medium 8 into the hollow chamber 7 of the clump weight 6. The person skilled in the art will appreciate that it is also possible that only one of the connecting elements 9 is hollow or that all connecting elements are hollow. By providing at least one hollow connecting element 9, the connecting element has a dual function, i.e. connecting the clump weight 6 and the buoyancy tank 5 with each other and guiding the filling medium 8 into the hollow chamber 7 of the clump weight 6. The person skilled in the art will appreciate that the filling medium 8 can also be guided into the hollow chamber 7 of the clump weight 6 via a separate inlet (not shown) or in any other suitable way.

Figure 3B shows that closing elements 13, which can be reinforced plates, are provided that are configured and arranged to retain the filling medium 8 in the hollow chamber 7 of the clump weight 6. In the exemplary, non-limiting embodiment of the invention shown in figures 3A and 3B, the closing elements 13 cover the hollow connecting elements 9. The person skilled in the art will appreciate that according to other non-exemplary embodiments of the invention, the closing elements can also be configured and arranged to cover at least one of the connecting elements, the passageways in the buoyancy tank 5 and the separate inlets of the clump weight after supplying the filling medium.

As shown in figure 3A, the buoyancy tank 5 has a height H1 as seen in an axial direction of the elongated center column 2. The height H1 can be chosen in a range between 3m and 6m. Furthermore, it can be seen that the clump weight 6 has a height H2 as seen in an axial direction of the elongated center column 2. The height H2 can be chosen in a range between 0.5 m and 2 m. The person skilled in the art will appreciate that the clump weight 6 is a counter weight that can have a flat pancake shape or any other polygon form structure comprising at least one of plates, stiffeners, girders and bulkheads.

As shown in figure 3B, the hollow connecting elements 9 have an effective height H3 as seen in an axial direction of the elongated center column 2. The effective height H3 can be chosen in a range between 5 m and 15 m. In this way, the distance D between the buoyancy tank 5 and the clump weight 6 in the abovementioned range between 4 m and 14 m can be achieved.

Furthermore, figure 3B shows that a ballast tank 14 is integrated into the buoyancy tank 5. The ballast tank 14 can be filled or emptied according to the desired draft for the elongated center column 2 of the fish farm. For example, when rough sea conditions are expected due to heavy storms or typhoons, it is possible to move the elongated center column 2 deeper below sea level by filling the ballast tank 14. In this way negative effects on the fish farm can be limited or ideally be prevented. Analogously, during calm sea conditions the elongated center column 2 can be raised further above sea level by emptying the ballast tank 14. It is then possible, for example to harvest fish and/or to perform maintenance activities.

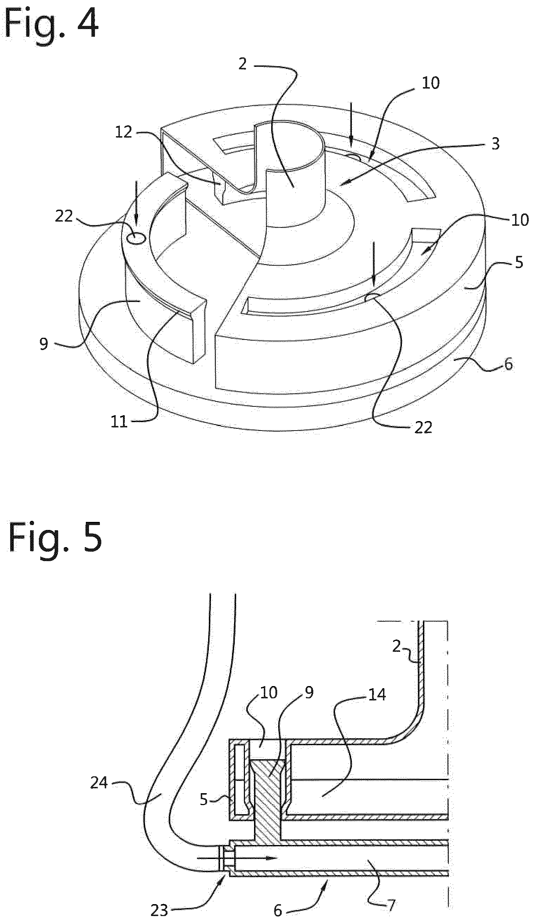

Figure 4 shows a schematic perspective view of a third exemplary, non-limiting embodiment of the ballast system 4 according to the invention during installation of the fish farm at a desired location at sea. The clump weight 6 is provided with three hollow connecting elements 9 that have a cross-section that is C-shaped. The connecting elements 9 can be welded to the clump weight 6. The buoyancy tank 5 is provided with passageways 10 that have a cross-section that is C-shaped. The cross-section of the passageways 10 is adapted to the cross-section of the connecting elements 9 to snuggly accommodate the connecting elements 9 in the passageways 10. The connecting elements 9 comprise a first tapered section 11. Furthermore, it can be seen that each passageway 10 comprises a second tapered section 12. The first tapered sections 11 and the second tapered section 12 are in abutting contact when the buoyancy tank 5 and the clump weight 6 in use of the fish farm are at said distance D with respect to each other.

Figure 4 furthermore shows that the connecting elements 9 are provided with inlets 22 that are configured and arranged to guide filling medium into the hollow chamber of the clump weight 6. The person skilled in the art will appreciate that it is also possible that for example only one of the connecting elements 9 is provided with an inlet 22. The person skilled in the art will appreciate that the filling medium 8 can also be guided into the hollow chamber of the clump weight 6 via a separate inlet or in any other suitable way.

Figure 5 shows a schematic perspective view of a fourth exemplary, non-limiting embodiment of the ballast system 4 according to the invention during installation of the fish farm at a desired location at sea. The connecting element 9 is a massive element, i.e. not hollow, that is welded to the clump weight 6. The clump weight 6 is provided with an inlet 23 that is connected to a hose 24. A filling medium 8 (not shown) can be guided into the hollow chamber 7 of the clump weight 6 via the hose 24 and the inlet 23.

The present invention can be summarized as relating to a semi-submersible spar-type offshore fish farm 1 for cultivating fish at open sea, comprising an elongated center column 2 that comprises a first end part 3, and a ballast system 4 that is arranged at the first end part 3 and that comprises at least one buoyancy tank 5 and at least one clump weight 6 that are movably interconnected. In use of said fish farm 1 the at least one buoyancy tank 5 and the at least one clump weight 6 are arranged at a distance, D, with respect to each other.

It will be clear to a person skilled in the art that the scope of the present invention is not limited to the examples discussed in the foregoing but that several amendments and modifications thereof are possible without deviating from the scope of the present invention as defined by the attached claims. In particular, combinations of specific features of various aspects of the invention may be made. An aspect of the invention may be further advantageously enhanced by adding a feature that was described in relation to another aspect of the invention. While the present invention has been illustrated and described in detail in the figures and the description, such illustration and description are to be considered illustrative or exemplary only, and not restrictive.

The present invention is not limited to the disclosed embodiments. Variations to the disclosed embodiments can be understood and effected by a person skilled in the art in practicing the claimed invention, from a study of the figures, the description and the attached claims. In the claims, the word "comprising" does not exclude other steps or elements, and the indefinite article "a" or "an" does not exclude a plurality. The mere fact that certain measures are recited in mutually different dependent claims does not indicate that a combination of these measures cannot be used to advantage. Any reference numerals in the claims should not be construed as limiting the scope of the present invention.

### REFERENCE NUMERALS

- 1: semi-submersible spar-type offshore fish farm
- 2: elongated center column
- 3: first end part of the elongated center column
- 4: ballast system
- 5: buoyancy tank
- 6: clump weight
- 7: hollow chamber of the clump weight
- 8: filling medium
- 9: connecting element
- 10: passageway
- 11: first tapered section of hollow connecting element
- 12: second tapered section of passageway
- 13: closing element
- 14: ballast tank
- 15: second end part of the elongated center column
- 16: control facility
- 17: anchor cables
- 18: semi-submersible netted rigid cage
- 19: buoyancy sleeve
- 20: limiting sleeve
- 21: harvesting sleeve
- 22: inlet arranged in connecting element
- 23: inlet arranged in clump weight
- 24: hose

## Claims

1. A semi-submersible spar-type offshore fish farm (1) for cultivating fish at open sea, comprising:
an elongated center column (2) that comprises a first, lower end part (3), and
a ballast system (4) that is arranged at the first, lower end part (3) and that comprises at least one buoyancy tank (5) and at least one adjustable clump weight (6) that are arranged concentrically with the elongated center column (2) at the lower end thereof and movably interconnected along a central axis of the elongated center column (2), wherein in use of said fish farm (1) the at least one adjustable clump weight (6) is suspended at a distance (D) below the at least one buoyancy tank (5), wherein the at least one adjustable clump weight (6) comprises at least one connecting element (9) that is configured and arranged to interconnect the at least one buoyancy tank (5) and the at least one adjustable clump weight (6) at said distance (D) with respect to each other, wherein the at least one buoyancy tank (5) is provided with at least one passageway (10) that is configured and arranged to accommodate the at least one connecting element (9), **characterized in that** the at least one connecting element (9) comprises a first tapered section (11) and the at least one passageway (10) comprises a second tapered section (12) that are in abutting contact when the at least one buoyancy tank (5) and the at least one adjustable clump weight (6) are at said distance (D) with respect to each other.

2. The semi-submersible spar-type offshore fish farm (1) according to claim 1, wherein the at least one adjustable clump weight (6) comprises at least one hollow chamber (7) that is configured and arranged to receive a filling medium (8) that in use of said fish farm (1) keeps the at least one adjustable clump weight (6) in place at said distance (D) from the at least one buoyancy tank (5).

3. The semi-submersible spar-type offshore fish farm (1) according to claim 2, wherein the at least one connecting element (9) is hollow and is configured and arranged to guide the filling medium (8) into the at least one hollow chamber (7) of the at least one adjustable clump weight (6).

4. The semi-submersible spar-type offshore fish farm (1) according to claim 3, wherein the at least one passageway (10) is provided with a closing element (13) that is configured and arranged to retain the filling medium (8) in the at least one hollow chamber (7) of the at least one adjustable clump weight (6).

5. The semi-submersible spar-type offshore fish farm (1) according to any one of the preceding claims, wherein the fish farm comprises a control system that is configured and arranged to adjust the distance (D) between the at least one buoyancy tank (5) and the at least one adjustable clump weight (6), wherein the distance (D) between the at least one buoyancy tank (5) and the at least one adjustable clump weight (6) is in a range between 4 m and 14 m.

6. The semi-submersible spar-type offshore fish farm (1) according to any one of the preceding claims, wherein the ballast system (4) comprises at least one ballast tank (14) that is connected to the at least one buoyancy tank (5).

7. The semi-submersible spar-type offshore fish farm (1) according to claim 1, wherein the at least one connecting element (9) has an effective height as seen in an axial direction of the elongated center column (2) in a range between 5 m and 15 m.

8. The semi-submersible spar-type offshore fish farm (1) according to any one of the preceding claims, wherein the at least one buoyancy tank (5) has a height as seen in an axial direction of the elongated center column (2) in a range between 3 m and 6 m.

9. The semi-submersible spar-type offshore fish farm (1) according to any one of the preceding claims, wherein the at least one adjustable clump weight (6) has a height as seen in an axial direction of the elongated center column (2) in a range between 0.5 m and 2 m.

10. The semi-submersible spar-type offshore fish farm (1) according to claim 3, wherein the at least one hollow connecting element (9) has a first cross-section being one of C-shaped, circular, and polygonal and the at least one passageway (10) has a second cross-section being one of C-shaped, circular, and polygonal that is adapted to the first cross-section to snuggly accommodate the at least one hollow connecting element (9) in the at least one passageway (10).

11. The semi-submersible spar-type offshore fish farm (1) according to claim 2, wherein the filling medium (8) is at least one of steel, lead, stone and concrete.

12. The semi-submersible spar-type offshore fish farm (1) according to any one of the previous claims, wherein the at least one adjustable clump weight is suspended from the at least one buoyancy tank.

13. Method of installing a semi-submersible spar-type offshore fish farm (1) according to any one of claims 1 to 12, the method comprising:
providing the semi-submersible spar-type offshore fish farm (1),
transporting the fish farm to a desired location at sea, wherein the at least one buoyancy tank (5) and the at least one adjustable clump weight (6) touch each other;
when the fish farm is at its desired location at sea, suspending the at least one adjustable clump weight (6) at a distance (D) below the at least one buoyancy tank (5).

14. The method of claim 13, wherein the step of suspending the at least one adjustable clump weight (6) at a distance (D) below the at least one buoyancy tank (5) comprises filling a hollow chamber (7) of the at least one adjustable clump weight (6) with a filling

15. The method of claim 14, wherein the filling medium (8) comprises one of steel, lead, stone and concrete.

## Patentansprüche

1. Eine halbtauchfähige Offshore-Fischfarm (1) vom Spar-Typ zum Kultivieren von Fisch am offenen Meer, umfassend:
eine längliche Mittelsäule (2), die ein erstes unteres Endteil (3) umfasst, und
ein Ballastsystem (4), das an dem ersten unteren Endteil (3) angeordnet ist und das mindestens einen Schwimmkörper (5) und mindestens einen einstellbaren Senkkörper (6) umfasst, die konzentrisch mit der länglichen Mittelsäule (2) an deren unteren Ende angeordnet sind und beweglich entlang einer Mittelachse der länglichen Mittelsäule (2) miteinander verbunden sind, wobei der mindestens eine einstellbare Senkkörper (6) bei Verwendung der genannten Fischfarm (1) mit einem Abstand (D) unter dem mindestens einen Schwimmkörper (5) hängt, wobei der mindestens eine einstellbare Senkkörper (6) mindestens ein Verbindungselement (9) umfasst, das eingerichtet und angeordnet ist, den mindestens einen Schwimmkörper (5) und den mindestens einen einstellbaren Senkkörper (6) bei dem Abstand (D) in Bezug zueinander miteinander zu verbinden, wobei der mindestens eine Schwimmkörper (5) mit mindestens einem Durchgang (10) versehen ist, der eingerichtet und angeordnet ist, das mindestens eine Verbindungselement (9) aufzunehmen, **dadurch gekennzeichnet, dass** das mindestens eine Verbindungselement (9) einen ersten konischen Abschnitt (11) umfasst und der mindestens eine Durchgang (10) einen zweiten konischen Abschnitt (12) umfasst, die in anliegendem Kontakt sind, wenn der mindestens eine Schwimmkörper (5) und der mindestens eine einstellbare Senkkörper (6) den Abstand (D) in Bezug zueinander aufweisen.

2. Die halbtauchfähige Offshore-Fischfarm (1) vom Spar-Typ nach Anspruch 1, wobei der mindestens eine einstellbare Senkkörper (6) mindestens eine Hohlkammer (7) umfasst, die eingerichtet und angeordnet ist, ein Füllmedium (8) aufzunehmen, das bei Verwendung der genannten Fischfarm (1) den mindestens einen einstellbaren Senkkörper (6) mit dem Abstand (D) zu dem mindestens einen Schwimmkörper (5) in Position hält.

3. Die halbtauchfähige Offshore-Fischfarm (1) vom Spar-Typ nach Anspruch 2, wobei das mindestens eine Verbindungselement (9) hohl ist und eingerichtet und angeordnet ist, das Füllmedium (8) in die mindestens eine Hohlkammer (7) des mindestens einen einstellbaren Senkkörpers (6) zu führen.

4. Die halbtauchfähige Offshore-Fischfarm (1) vom Spar-Typ nach Anspruch 3, wobei der mindestens eine Durchgang (10) mit einem Verschlusselement (13) versehen ist, das eingerichtet und angeordnet ist, das Füllmedium (8) in der mindestens einen Hohlkammer (7) des mindestens einen einstellbaren Senkkörpers (6) zurückzuhalten.

5. Die halbtauchfähige Offshore-Fischfarm vom Spar-Typ nach einem der vorstehenden Ansprüche, wobei die Fischfarm ein Steuersystem umfasst, das eingerichtet und angeordnet ist, den Abstand (D) zwischen dem mindestens einen Schwimmkörper (5) und dem mindestens einen einstellbaren Senkkörper (6) einzustellen, wobei der Abstand (D) zwischen dem mindestens einen Schwimmkörper (5) und dem mindestens einen einstellbaren Senkkörper (6) in einem Bereich zwischen 4 m und 14 m liegt.

6. Die halbtauchfähige Offshore-Fischfarm (1) vom Spar-Typ nach einem der vorstehenden Ansprüche, wobei das Ballastsystem (4) mindestens einen Ballasttank (14) umfasst, der mit dem mindestens einen Schwimmkörper (5) verbunden ist.

7. Die halbtauchfähige Offshore-Fischfarm (1) vom Spar-Typ nach Anspruch 1, wobei das mindestens eine Verbindungselement (9) eine effektive Höhe, betrachtet in einer Achsrichtung der länglichen Mittelsäule (2), in einem Bereich zwischen 5 m und 15 m aufweist.

8. Die halbtauchfähige Offshore-Fischfarm (1) vom Spar-Typ nach einem der vorstehenden Ansprüche, wobei der mindestens eine Schwimmkörper (5) eine Höhe, betrachtet in einer Achsrichtung der länglichen Mittelsäule (2), in einem Bereich zwischen 3 m und 6 m aufweist.

9. Die halbtauchfähige Offshore-Fischfarm (1) vom Spar-Typ nach einem der vorstehenden Ansprüche, wobei der mindestens eine einstellbare Senkkörper (6) eine Höhe, betrachtet in einer Achsrichtung der länglichen Mittelsäule (2), in einem Bereich zwischen 0,5 m und 2 m aufweist.

10. Die halbtauchfähige Offshore-Fischfarm (1) vom Spar-Typ nach Anspruch 3, wobei das mindestens eine hohle Verbindungselement (9) einen ersten Querschnitt aufweist, der eines von C-förmig, kreisförmig und mehreckig ist, und der mindestens eine Durchgang (10) einen zweiten Querschnitt aufweist, der eines von C-förmig, kreisförmig und mehreckig ist, der an den ersten Querschnitt angepasst ist, um das mindestens eine hohle Verbindungselement (9) in dem mindestens einen Durchgang (10) passend aufzunehmen.

11. Die halbtauchfähige Offshore-Fischfarm (1) vom Spar-Typ nach Anspruch 2, wobei das Füllmedium (8) mindestens eines von Stahl, Blei, Stein und Beton ist.

12. Die halbtauchfähige Offshore-Fischfarm (1) vom Spar-Typ nach einem der vorstehenden Ansprüche, wobei der mindestens eine einstellbare Senkkörper an dem mindestens einen Schwimmkörper hängt.

13. Verfahren zum Errichten einer halbtauchfähigen Offshore-Fischfarm (1) vom Spar-Typ nach einem der Ansprüche 1 bis 12, wobei das Verfahren umfasst:
Vorsehen der halbtauchfähigen Offshore-Fischfarm (1) vom Spar-Typ,
Transportieren der Fischfarm zu einem gewünschten Standort im Meer, wobei der mindestens eine Schwimmkörper (5) und der mindestens eine einstellbare Senkkörper (6) einander berühren;
wenn sich die Fischfarm an ihrem gewünschten Standort im Meer befindet, Abhängen des mindestens einen einstellbaren Senkkörpers (6) mit einem Abstand (D) unter dem mindestens einen Schwimmkörper (5).

14. Verfahren nach Anspruch 13, wobei der Schritt zum Abhängen des mindestens einen einstellbaren Senkkörpers (6) mit einem Abstand (D) unter dem mindestens einen Schwimmkörper (5) Füllen einer Hohlkammer (7) des mindestens einen einstellbaren Senkkörpers (6) mit einem Füllmedium umfasst.

15. Verfahren nach Anspruch 14, wobei das Füllmedium (8) eines von Stahl, Blei, Stein und Beton umfasst.

## Revendications

1. Une ferme piscicole offshore semi-submersible de type spar (1) pour l'élevage de poissons en haute mer, comprenant :
une colonne centrale allongée (2) comprenant une première extrémité inférieure (3), et
un système de ballast (4) agencé au niveau de la première extrémité inférieure (3) et comprenant au moins un réservoir de flottabilité (5) et au moins un poids de lestage réglable (6) agencés de façon concentrique avec la colonne centrale allongée (2) au niveau de l'extrémité inférieure de celle-ci et interconnectés de manière mobile le long d'un axe central de la colonne centrale allongée (2), dans laquelle, lors de l'utilisation de ladite ferme piscicole (1), l'au moins un poids de lestage réglable (6) est suspendu à une distance (D) sous l'au moins un réservoir de flottabilité (5), dans laquelle l'au moins un poids de lestage réglable (6) comprend au moins un élément d'assemblage (9) configuré et agencé pour interconnecter l'au moins un réservoir de flottabilité (5) et l'au moins un poids de lestage réglable (6) à ladite distance (D) l'un par rapport à l'autre, dans laquelle l'au moins un réservoir de flottabilité (5) est doté d'au moins un passage (10) configuré et agencé pour accueillir l'au moins un élément d'assemblage (9), **caractérisée en ce que** l'au moins un élément d'assemblage (9) comprend une première section conique (11) et l'au moins un passage (10) comprend une deuxième section conique (12), lesquelles sont en contact de butée lorsque l'au moins un réservoir de flottabilité (5) et l'au moins un poids de lestage réglable (6) se trouvent à ladite distance (D) l'un par rapport à l'autre.

2. La ferme piscicole offshore semi-submersible de type spar (1) selon la revendication 1, dans laquelle l'au moins un poids de lestage réglable (6) comprend au moins une chambre creuse (7) configurée et agencée pour recevoir un agent de remplissage (8) qui, lors de l'utilisation de ladite ferme piscicole (1), maintient l'au moins un poids de lestage réglable (6) en place à ladite distance (D) par rapport à l'au moins un réservoir de flottabilité (5).

3. La ferme piscicole offshore semi-submersible de type spar (1) selon la revendication 2, dans laquelle l'au moins un élément d'assemblage (9) est creux et configuré et agencé pour guider l'agent de remplissage (8) dans l'au moins une chambre creuse (7) de l'au moins un poids de lestage réglable (6).

4. La ferme piscicole offshore semi-submersible de type spar (1) selon la revendication 3, dans laquelle l'au moins un passage (10) est doté d'un élément de fermeture (13) configuré et agencé pour retenir l'agent de remplissage (8) dans l'au moins une chambre creuse (7) de l'au moins un poids de lestage réglable (6).

5. La ferme piscicole offshore semi-submersible de type spar (1) selon l'une quelconque des revendications précédentes, dans lequel la ferme piscicole comprend un système de commande configuré et agencé pour régler la distance (D) entre l'au moins un réservoir de flottabilité (5) et l'au moins un poids de lestage réglable (6), dans lequel la distance (D) entre l'au moins un réservoir de flottabilité (5) et l'au moins un poids de lestage réglable (6) est dans une plage comprise entre 4 m et 14 m.

6. La ferme piscicole offshore semi-submersible de type spar (1) selon l'une quelconque des revendications précédentes, dans lequel le système de ballast (4) comprend au moins un réservoir de ballast (14) relié à l'au moins un réservoir de flottabilité (5).

7. La ferme piscicole offshore semi-submersible de type spar (1) selon la revendication 1, dans laquelle l'au moins un élément d'assemblage (9) a une hauteur effective, vue dans une direction axiale de la colonne centrale allongée (2), dans une plage comprise entre 5 m et 15 m.

8. La ferme piscicole offshore semi-submersible de type spar (1) selon l'une quelconque des revendications précédentes, dans laquelle l'au moins un réservoir de flottabilité (5) a une hauteur, vue dans une direction axiale de la colonne centrale allongée (2), dans une plage comprise entre 3 m et 6 m.

9. La ferme piscicole offshore semi-submersible de type spar (1) selon l'une quelconque des revendications précédentes, dans laquelle l'au moins un poids de lestage réglable (6) a une hauteur, vue dans une direction axiale de la colonne centrale allongée (2), dans une plage comprise entre 0,5 m et 2 m.

10. La ferme piscicole offshore semi-submersible de type spar (1) selon la revendication 3, dans laquelle l'au moins un élément d'assemblage creux (9) présente une première section transversale en forme de C, circulaire ou polygonale, et l'au moins un passage (10) présente une deuxième section transversale en forme de C, circulaire ou polygonale, laquelle est adaptée à la première section transversale pour loger parfaitement l'au moins un élément d'assemblage creux (9) dans l'au moins un passage (10).

11. La ferme piscicole offshore semi-submersible de type spar (1) selon la revendication 2, dans laquelle l'agent de remplissage (8) est au moins l'un parmi l'acier, le plomb, la pierre et le béton.

12. La ferme piscicole offshore semi-submersible de type spar (1) selon l'une quelconque des revendications précédentes, dans laquelle l'au moins un poids de lestage réglable est suspendu à l'au moins un réservoir de flottabilité.

13. Procédé d'installation d'une ferme piscicole offshore semi-submersible de type spar (1) selon l'une quelconque des revendications 1 à 12, le procédé comprenant:
fourniture de la ferme piscicole offshore semi-submersible de type spar (1),
transporter la ferme piscicole jusqu'à un emplacement souhaité en mer, dans lequel l'au moins un réservoir de flottabilité (5) et l'au moins un poids de lestage réglable (6) se touchent;
lorsque la ferme piscicole est à son emplacement souhaité en mer, suspendre de l'au moins un poids de lestage réglable (6) à une distance (D) sous l'au moins un réservoir de flottabilité (5).

14. Procédé selon la revendication 13, dans lequel l'étape de suspension de l'au moins un poids de lestage réglable (6) à une distance (D) sous l'au moins un réservoir de flottabilité (5) comprend remplir une chambre creuse (7) de l'au moins un poids de lestage réglable (6) avec un agent de remplissage.

15. Procédé selon la revendication 14, dans lequel l'agent de remplissage (8) comprend l'un parmi l'acier, le plomb, la pierre et le béton.
